Europäisches Patentamt

European Patent Office

Office européen des brevets

(11) Numéro de publication: **0 387 708 B1**

# FASCICULE DE BREVET EUROPEEN

(45) Date de publication de fascicule du brevet: **19.04.95**   (51) Int. Cl.[6]: **C11B 3/02**

(21) Numéro de dépôt: **90104481.8**

(22) Date de dépôt: **09.03.90**

(54) **Procédé de réduction de la teneur en cholestérol et en acides gras libres d'une matière grasse d'origine animale et matière grasse ainsi obtenue.**

(30) Priorité: **14.03.89 BE 8900278**
**06.12.89 BE 8901307**

(43) Date de publication de la demande:
**19.09.90 Bulletin 90/38**

(45) Mention de la délivrance du brevet:
**19.04.95 Bulletin 95/16**

(84) Etats contractants désignés:
**AT BE CH DE DK ES FR GB GR IT LI LU NL SE**

(56) Documents cités:
**EP-A- 0 256 911**
**EP-A- 0 326 469**
**US-A- 3 491 132**

(73) Titulaire: **S.A.N. CORMAN**
**Route de la Gileppe 4**
**B-4834 GOE (BE)**

(72) Inventeur: **Roderbourg, Hubert**
**6 Avenue F. Jérome**
**B-4882 Niveze (BE)**
Inventeur: **Dalemans, Daniel**
**70 Rue F. Chaumont**
**B-4400 Herstal (BE)**
Inventeur: **Bouhon, Robert**
**140 Avenue de Barisart**
**B-4880 Spa (BE)**

(74) Mandataire: **Boulinguiez, Didier et al**
**Cabinet Plasseraud**
**84, rue d'Amsterdam**
**F-75009 Paris (FR)**

Rank Xerox (UK) Business Services
(3.10/3.09/3.3.3)

**Description**

La présente invention est relative à un procédé de réduction de la teneur en cholestérol et en acides gras libres d'une matière grasse d'origine animale et à la matière grasse ainsi obtenue.

Les matières grasses animales, comme la matière grasse du lait (beurre, crème...), le suif et le saindoux contiennent des stérols et, en particulier, du cholestérol ainsi que des acides gras libres.

Malgré son rôle vital, le cholestérol est considéré comme étant un élément de risque pour les maladies cardiovasculaires, et la progression de l'athérosclérose chez l'homme a souvent été associée de près à la teneur en cholestérol dans le sang.

On a par conséquent essayé de diminuer la quantité de cholestérol présent dans les graisses animales utilisées en alimentation humaine.

Le cholestérol peut être extrait par évaporation sous vide poussé, à une température de 240 à 280 degrés Celsius. Ce traitement entraîne cependant la perte d'éléments volatils aromatiques naturels qui s'évaporent également.

La percolation de la matière grasse à une température de 70 à 90 degrés Celsius sur du charbon actif permet également de réduire la teneur en cholestérol mais le charbon actif fixe également d'autres substances naturelles du corps gras comme notamment les composants aromatiques, les antioxydants et le colorant.

L'extraction du cholestérol au dioxyde de carbone en condition supercritique, c'est-à-dire à des pressions supérieures à $10^7$ Pa (100 bars), est une technique difficilement utilisable industriellement. En outre l'extraction du cholestérol n'est pas sélective. Par exemple, lors du traitement de la matière grasse du lait, une part importante de triglycérides à chaîne courte sera également extraite.

La demande de brevet EP-A-0 256 911 décrit un procédé d'élimination du cholestérol de matières grasses d'origine animale, selon lequel la matière grasse fluidifiée est mise en contact avec une cyclodextrine, ce contact est prolongé sous agitation sous atmosphère non oxydante et à une température comprise entre la température de fusion de la matière grasse et 80 degrés Celsius pendant une période de 30 minutes à 10 heures, au cours de laquelle des complexes entre le cholestérol et la cyclodextrine seraient formés, après quoi de l'eau est ajoutée et lesdits complexes sont extraits de la matière grasse par entraînement dans la phase aqueuse ainsi créée qui est ensuite séparée de la phase grasse.

Ce procédé est non seulement relativement long mais il ne permet qu'une réduction limitée de la teneur en cholestérol en une seule opération. Une seule opération ne permet en effet que l'élimination de 18 à 33 % du cholestérol initial. Pour obtenir une extraction plus importante, plusieurs opérations successives doivent ainsi être effectuées, éventuellement suivies à chaque fois d'une étape de lavage de la phase lipidique. Avec trois extractions successives on arrive à extraire 41 % du cholestérol initial. En théorie, on pourrait arriver ainsi à éliminer jusqu'à 80 % du cholestérol initial. Aucune mention n'est faite par ailleurs dans EP-A-0 256 911 d'une élimination quelconque des acides gras libres.

La demande de brevet EP-A-0 326 469, qui fait partie de l'état de la technique au titre de l'article 54(3) de la Convention sur le Brevet Européen, décrit notamment l'élimination de composés stéroïdiques, dont le cholestérol, contenus dans une matière grasse d'origine animale, à l'aide de cyclodextrine et en présence d'eau. L'agitation du milieu réactionnel est effectuée sur table mélangeante, les temps de contact sont très longs, puisque de préférence égaux à 5 heures, et les rendements d'extraction ne sont pas optimums.

La présente invention a pour but de remédier aux inconvénients précités et de fournir un procédé toujours basé sur l'extraction du cholestérol des matières grasses animales par la cyclodextrine, mais agencé de telle sorte qu'il permette d'obtenir d'une manière rapide et efficace, en une seule opération, une réduction importante de la teneur en cholestérol et en même temps une réduction sensible de la teneur en acides gras libres d'une matière grasse d'origine animale.

On entend par matière grasse d'origine animale notamment le beurre, la crème laitière, la matière grasse laitière anhydre, le suif et le saindoux.

Le procédé conforme à l'invention consiste à mettre en contact la cyclodextrine et la matière grasse en présence d'eau, puis à séparer les complexes qui se sont formés entre la cyclodextrine et le cholestérol et les acides gras, et il est essentiellement caractérisé par le fait que le rapport pondéral eau/matière grasse est choisi entre 0,4/1 et 1,9/1, de préférence entre 0,7/1 et 1,5/1, et plus préférentiellement encore voisin de 1/1.

L'eau est nécessaire pour que la formation des complexes puisse s'effectuer et c'est notamment grâce au choix du rapport pondéral eau/matière grasse dans les gammes précitées que l'on peut obtenir une extraction très rapide et très efficace du cholestérol et des acides gras libres.

L'eau peut être ajoutée séparément ou en même temps que la cyclodextrine. Lorsqu'elle est ajoutée séparément, elle peut l'être avant ou après l'addition de la cyclodextrine à la matière grasse. Lorsqu'elle est ajoutée après la cyclodextrine, la formation des complexes peut déjà commencer avant l'addition de l'eau mais ne se fait que lentement. Ce n'est qu'à partir de l'addition de l'eau que la formation des complexes se produit plus rapidement et plus complètement.

Pour cette raison, il est avantageux d'ajouter l'eau en même temps que la cyclodextrine, et en particulier de dissoudre préalablement la cyclodextrine dans au moins une fraction de cette eau.

La Société Demanderesse a découvert, et c'est là un aspect avantageux de l'invention, qu'il était souhaitable de créer une émulsion du type "huile dans eau" afin que l'extraction du cholestérol et des acides gras libres soit la plus efficace et la plus rapide possibles.

Il apparaît que les complexes cyclodextrine-cholestérol et cyclodextrine-acides gras libres se forment à l'interface "matière grasse-solution aqueuse" et il a été constaté que, de façon surprenante et inattendue, cette complexation s'effectue très rapidement en faisant en sorte qu'une émulsion du type "huile dans eau" soit formée.

Les paramètres quantité d'eau, agitation et température sont donc choisis de manière à ce que se forme cette émulsion, le but étant de la rendre suffisamment "fine" afin d'optimiser les contacts entre la cyclodextrine et le cholestérol et les acides gras libres et par là leur complexation puis leur extraction.

La complexation ayant lieu au sein de l'émulsion, le temps de contact entre la cyclodextrine et la matière grasse avant l'addition d'eau peut être réduit à zéro, alors que, selon la demande de brevet EP-O-0 256 911, ce temps de contact est d'au moins 30 minutes et atteint en pratique, dans les exemples de réalisation donnés, 3 heures.

Dans le procédé décrit dans cette demande de brevet, une émulsion "huile dans eau" n'est pas formée, même après addition de l'eau, étant donné que la quantité d'eau est trop importante, cette quantité d'eau affectant d'ailleurs la stabilité des complexes.

Le rapport pondéral entre la quantité d'eau et la quantité de matière grasse est donc très important pour l'obtention de l'émulsion idéale du type "huile dans eau". Par ailleurs, une quantité d'eau trop faible par rapport à la quantité de matière grasse occasionne la formation d'une émulsion trop visqueuse et difficile à rompre ultérieurement.

Selon un mode de réalisation de l'invention, la cyclodextrine est ajoutée à la matière grasse en l'absence d'eau, et le contact entre la cyclodextrine et la matière grasse en l'absence d'eau est maintenu pendant une durée inférieure à 20 minutes et de préférence inférieure à 10 minutes.

Selon un autre mode de réalisation de l'invention, la cyclodextrine est préalablement dissoute dans l'eau avant d'être mélangée à la matière grasse.

Dans le cas où la matière grasse dont il faut extraire le cholestérol et/ou les acides gras libres se présente sous la forme d'une émulsion dans l'eau, comme c'est le cas en particulier pour la crème de lait, la cyclodextrine est de préférence introduite sous forme de poudre dans cette émulsion, éventuellement portée à une température propre à faciliter la solubilisation de la cyclodextrine dans la phase aqueuse.

Selon un mode de réalisation avantageux de l'invention, on règle la température du milieu matière grasse-eau-cyclodextrine de façon à ce que, pour une concentration choisie de cyclodextrine, cette température soit proche de la température de solubilité de la cyclodextrine dans l'eau pour cette concentration.

La quantité de cyclodextrine utilisée conformément à l'invention est comprise entre 1 % et 10 % en poids par rapport à la quantité de matière grasse, et de préférence est comprise entre 3 % et 8 % en poids. De façon générale, il est avantageux d'ajouter des quantités de cyclodextrine supérieures à 5 % par rapport à la quantité de matière grasse employée.

Différents types de cyclodextrines ou de cyclodextrines modifiées peuvent être utilisés conformément à l'invention. On peut citer par exemple l'$\alpha$-, la $\beta$- et la $\gamma$-cyclodextrine, comportant respectivement 6, 7 et 8 unités glucopyranose reliées entre elles par des liaisons $\alpha$-1-4, ainsi que leurs dérivés respectifs comme les hydroxyalkyl-cyclodextrines, les maltosyl-cyclodextrines, les glucosyl-cyclodextrines et les alkyl-cyclodextrines.

De préférence, on utilise la $\beta$-cyclodextrine.

Avec une quantité de $\beta$-cyclodextrine de plus de 5 % par rapport à la matière grasse, plus de 96 % et même pratiquement 100 % du cholestérol contenu dans la matière grasse peuvent ainsi être éliminés à l'aide du procédé conforme à l'invention.

L'agitation du milieu matière grasse-eau-cyclodextrine est réalisée dans des conditions suffisamment vigoureuses pour assurer un contact intime entre la cyclodextrine et la matière grasse et, selon le mode de réalisation préférentiel de l'invention, est effectuée de façon à permettre la formation d'une émulsion du type "huile dans eau". Il est souhaitable, comme il a été indiqué précédemment, d'obtenir une émulsion fine, les globules de matière grasse dispersés dans la phase aqueuse présentant, en majorité, une taille inférieure à 40 micromètres, même si quelques globules dont la taille peut atteindre 100 micromètres sont encore présents.

Ceci permet une formation très rapide des complexes cyclodextrine-cholestérol et cyclodextrine-acides gras libres à l'interface eau/matière grasse, une agitation intense favorisant les contacts à cette interface. Les complexes formés se concentrent dans la phase aqueuse où ils s'insolubilisent.

L'agitation ne doit cependant pas comporter trop de forces de cisaillement car l'expérience a montré que ces forces provoquent une augmentation de la viscosité de l'émulsion, cette dernière étant alors difficile à rompre au cours de l'étape ultérieure de séparation des phases.

Une agitation adaptée peut être obtenue par exemple à l'aide d'un agitateur à hélice tournant à une vitesse élevée, de préférence supérieure à 800 tours/minute et en pratique voisine de 2000 tours/minute. On observe, lorsque l'agitation est adéquate, un changement d'aspect visuel du milieu constitué par la matière grasse, l'eau et la cyclodextrine. La coloration passe ainsi d'une couleur jaune paille peu homogène, puisque comportant quelques traînées blanchâtres, à une coloration jaune laiteuse homogène.

Grâce au choix du rapport pondéral eau/matière grasse dans les limites précitées et grâce à la création d'une émulsion huile dans eau de par l'établissement d'une agitation appropriée, d'excellents résultats d'extraction du cholestérol et des acides gras libres peuvent être obtenus en une seule opération avec des temps de contact relativement courts, avec des taux d'utilisation de cyclodextrine de l'ordre de 5 % par rapport à la matière grasse.

La température de réalisation de l'émulsion est également importante et, comme indiqué précédemment, il est tout à fait avantageux de la choisir, pour une concentration donnée de cyclodextrine, à une valeur relativement proche de la température de solubilité de la cyclodextrine dans l'eau pour cette concentration.

Si la température est trop élevée, l'émulsion désirée ne se réalise pas et la formation des complexes en est affectée. Si cette température est trop basse, il y a risque de recristallisation de la $\beta$-cyclodextrine dans la phase aqueuse avant formation des complexes.

A l'issue de nombreuses expérimentations, il a été trouvé que la température optimale du milieu matière grasse-eau-cyclodextrine devait être choisie au voisinage de celle correspondant à la courbe de solubilité de la cyclodextrine dans l'eau, et de préférence à une valeur légèrement inférieure à la température de solubilité de la cyclodextrine pour une concentration choisie, de façon à tenir compte du phénomène de surfusion.

Sans vouloir être liés par la théorie, on peut penser que le fait de régler la température du milieu à une température proche de la limite de solubilité de la cyclodextrine, et de préférence légèrement inférieure à celle-ci, favorise la précipitation ou la cristallisation des complexes cyclodextrine-cholestérol et des complexes cyclodextrine-acides gras libres.

Le choix de la quantité d'eau et de la température, pour une quantité donnée de cyclodextrine, est donc important pour assurer la meilleure efficacité d'extraction du cholestérol. Il semble que les complexes formés doivent rester insolubles dans la phase aqueuse.

Les valeurs de la solubilité de la $\beta$-cyclodextrine dans l'eau, en fonction de la température, d'après J. SZEJTLI dans "Cyclodextrins and their inclusion complexes", Akademiai Kiado, Budapest 1982, sont données dans le tableau ci-après.

| Grammes de $\beta$-cyclodextrine dans 100 ml de solution | Température en degrés Celsius |
|---|---|
| 1,20 | 15 |
| 1,48 | 20 |
| 1,79 | 25 |
| 2,25 | 30 |
| 3,51 | 40 |
| 4,64 | 50 |
| 6,05 | 55 |
| 7,49 | 60 |
| 10,18 | 65 |
| 12,03 | 70 |
| 14,80 | 75 |
| 19,66 | 80 |

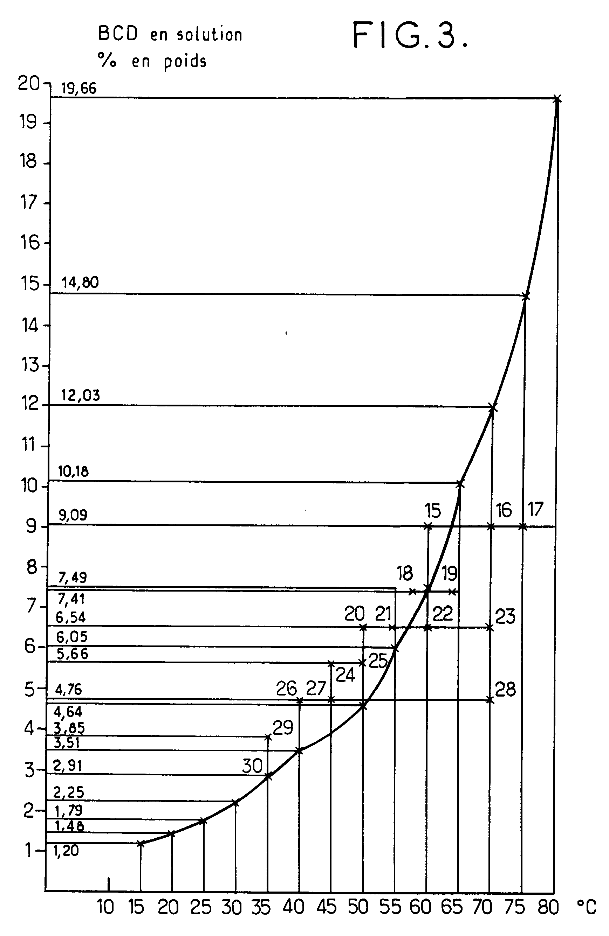

et la courbe de solubilité correspondante est représentée a la figure 3.

Dans la pratique, si on appelle T la température de solubilité de la cyclodextrine, on peut choisir la température du milieu matière grasse-eau-cyclodextrine dans un intervalle de T - 15°C à T + 15°C, de préférence de T - 15°C à T + 10°C. Généralement, on choisira cependant une température qui ne sera pas supérieure de plus de 5°C à ladite température de solubilité.

Avec un rapport pondéral eau/matière grasse fixé dans les limites indiquées, une agitation adéquate et une température de l'émulsion choisie dans les limites définies ci-dessus de la courbe de solubilité de la cyclodextrine, on observe que la formation de l'émulsion fine "huile dans l'eau" recherchée est pratiquement instantanée et que la formation des complexes est très rapide.

Néanmoins, on peut laisser l'agitation et donc le contact entre la cyclodextrine, l'eau et la matière grasse se poursuivre pendant environ 1 à 20 minutes et de préférence pendant environ 5 à 10 minutes pour être certain que la formation des complexes soit essentiellement complète.

Grâce au procédé conforme à l'invention, le temps de contact entre la cyclodextrine, l'eau et la matière grasse peut donc être très court, et ceci constitue évidemment un avantage essentiel par rapport aux procédés de l'art antérieur.

Un autre avantage essentiel réside dans le fait que le procédé peut être conduit dans une atmosphère normale, et qu'il ne nécessite pas d'avoir recours à une atmosphère non oxydante, comme c'est le cas pour le procédé décrit dans la demande de brevet EP-A-0 256 911.

Après la formation des complexes, la phase aqueuse et la phase lipidique peuvent être séparées par tout moyen connu tel que la centrifugation ou la décantation, l'épuration centrifuge étant préférée.

La séparation est conduite à une température supérieure à la température de fusion de la matière grasse et de préférence à une température relativement proche, mais préférentiellement inférieure, de la température employée lors de la formation des complexes.

Une température d'environ 40°C-45°C peut ainsi être utilisée pour une séparation efficace des phases aqueuse et lipidique ainsi que des complexes insolubles formés.

De préférence, une étape de refroidissement du mélange matière grasse-eau-cyclodextrine est intercalée entre l'étape de formation des complexes et l'étape de séparation proprement dite, afin de stabiliser les complexes formés en les insolubilisant plus complètement. Ainsi, le mélange en question est d'abord refroidi, par exemple à une température de 25 à 35°C, de préférence d'environ 30°C, afin de parfaire l'insolubilisation des complexes formés, puis il est à nouveau réchauffé pour atteindre la température de séparation choisie qui est, comme indiqué précédemment, avantageusement égale à 40-45°C environ.

Etant donné la présence de matières insolubles dans l'eau, en particulier les complexes formés, la séparation peut être réalisée avantageusement sur une centrifugeuse permettant l'élimination fréquente des dépôts.

Ceux-ci sont constitués essentiellement de cyclodextrine ayant encapsulé principalement le cholestérol et les acides gras libres.

La phase aqueuse contient une faible quantité de matière sèche, composée essentiellement de cyclodextrine.

La matière grasse appauvrie en cholestérol et en acides gras libres contient encore un peu d'eau, généralement de l'ordre de 0,5 %. Elle peut être réchauffée et traitée par évaporation sous vide pour l'amener à 99,9 % de pureté.

Après la séparation de la phase aqueuse et de la phase grasse, la phase grasse peut être soumise à un lavage à l'eau suivi d'une nouvelle séparation centrifuge des phases ainsi obtenues.

La séparation des phases aqueuse et lipidique, après la formation des complexes, peut également être réalisée au moyen de la technique de barattage de l'émulsion refroidie, ce barattage pouvant d'ailleurs être éventuellement suivi d'une fonte de la matière grasse et d'une épuration centrifuge.

Selon cette technique, on procède tout d'abord à un refroidissement de l'émulsion formée conformément à l'invention entre la matière grasse, la cyclodextrine et l'eau, puis on la laisse maturer pendant quelques heures à une température d'au plus 10°C, après quoi on procède au barattage.

Le refroidissement et la maturation physique de l'émulsion ont pour but de cristalliser, au moins partiellement, la matière grasse, l'état partiellement solide de la graisse étant requis pour l'opération suivante de barattage. Cette étape à basse température permet également de stabiliser les complexes en les insolubilisant plus complètement.

Le barattage peut être réalisé sur une baratte classique de beurrerie (baratte discontinue) mais un butyrateur continu peut également être employé.

L'émulsion est barattée à basse température, de préférence inférieure à environ 10°C; les grains de matière grasse, et notamment de beurre, obtenus sont ensuite lavés et malaxés puis la matière grasse est stockée au froid avant son éventuel traitement ultérieur. La phase aqueuse issue de ce barattage est pauvre en matière grasse.

La matière grasse issue de cette étape de barattage à froid peut ensuite être éventuellement fondue et réchauffée, par exemple à une température d'environ 45°C, avant d'être soumise à une épuration centrifuge afin d'éliminer plus complètement les résidus de cyclodextrine et les complexes qu'elle peut encore contenir.

De même que précédemment, on peut au besoin soumettre la phase grasse à un lavage à l'eau avant épuration centrifuge.

On peut mentionner que lorsque la matière grasse est constituée par de la matière grasse laitière anhydre (MGLA) ou de la crème laitière, on obtient déjà à l'issue de l'étape de barattage un beurre à teneur réduite en cholestérol et en acides gras libres qui peut être commercialisé en l'état, ou qui peut servir, après extraction et évaporation de l'eau, à la préparation de MGLA à teneur réduite en cholestérol et en acides gras libres.

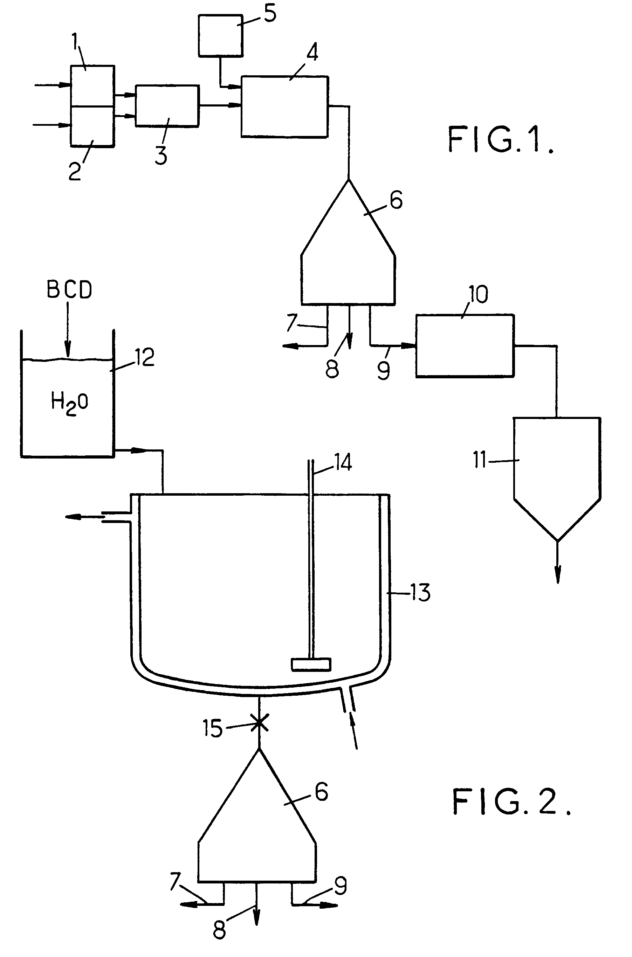

Le procédé conforme à l'invention peut être réalisé en continu, à l'aide d'une installation telle que schématiquement représentée a la figure 1.

Cette installation comprend un doseur 1 pour la $\beta$-cyclodextrine et un doseur 2 pour l'eau. La $\beta$-cyclodextrine est dissoute dans l'eau dosée dans la cuve 3. La solution est introduite dans le dispositif de mise en contact et d'agitation 4. De la matière grasse chauffée et dosée dans le doseur 5 est envoyée également au dispositif 4. Les phases grasse et aqueuse sortant du dispositif 4 peuvent être séparées dans le séparateur centrifuge à débourbage 6. La phase aqueuse sort par 7, les complexes par 8 et la phase grasse par 9. Cette dernière phase est réchauffée dans le dispositif 10 et soumis à une évaporation sous vide dans l'évaporateur 11.

Le procédé peut également être réalisé, partiellement ou complètement, en discontinu, à l'aide par exemple d'une installation représentée schématiquement à la figure 2, qui comprend une cuve 12 de préparation de la solution de cyclodextrine (BCD), une cuve 13 de réaction, comportant une double paroi dans laquelle peut circuler de l'eau chauffée, un agitateur à hélice 14 et un robinet de vidange 15, et un appareil de séparation centrifuge 6.

Pour illustrer l'invention plus concrètement, des exemples de traitement, les uns effectués conformément à l'invention et les autres donnés à titre comparatif, sont donnés ci-après.

Les méthodes d'analyse utilisées dans ces exemples sont les suivantes.

Pour le dosage du cholestérol :
- analyse des stérols par précipitation à la digitonine (le cholestérol représente 98 % de la fraction stérolique dans la MGLA);

Pour le dosage des acides gras libres :
- titrage de l'acidité des échantillons de MGLA dissous dans un mélange neutre d'éther de pétrole et d'isopropanol (titrage par le n-tétrabutyl-hydroxy-ammonium en employant du bleu de thymol comme indicateur).

## EXEMPLE 1

1 kg de MGLA à 45°C est versé dans une cuve de réaction en verre d'une capacité de 5 litres et équipée d'une double paroi, d'un agitateur à hélice à vitesse variable et d'un robinet de vidange. De l'eau à 45°C circule dans la double paroi de la cuve d'agitation afin d'assurer la thermostatisation.

On ajoute à la MGLA 50 g (soit 5 % en poids par rapport à la matière grasse) de $\beta$-cyclodextrine que l'on répartit uniformément dans la phase lipidique grâce à l'agitation. La suspension formée est maintenue sous agitation pendant 1 minute.

Après ce temps de contact d'1 minute entre la MGLA et la $\beta$-cyclodextrine, on ajoute à la suspension 1 litre d'eau maintenue à 55°C. La vitesse d'agitation est augmentée afin de provoquer le mélange intime des phases et la création d'une interface eau-huile suffisamment importante pour former les complexes entre la cyclodextrine et le cholestérol ainsi que les acides gras libres, et les déplacer vers la phase aqueuse.

La température maximale atteinte par le mélange est de 50°C. L'étape de contact sous agitation et en présence d'eau dure 10 minutes.

Le mélange est ensuite traité en continu sur un séparateur centrifuge afin de séparer les phases (phase lipidique, phase aqueuse, et $\beta$-cyclodextrine ayant encapsulé le cholestérol et les acides gras libres). Les complexes insolubles se déposent sur la paroi intérieure du séparateur et sont récupérés après l'arrêt et l'ouverture de celui-ci. La durée de l'étape de séparation centrifuge est d'environ 8 minutes. Dans ces conditions de séparation, la phase grasse récupérée contient environ 0,2 % d'humidité. Par une évaporation sous vide, il est possible d'amener ce taux d'humidité à une valeur inférieure à 0,1 %. Aucune opération supplémentaire de lavage de la MGLA récupérée n'a été réalisée. On verra dans l'exemple 14 ci-après que

6

cette opération de lavage n'est pas réellement indispensable quant à la qualité de l'épuration.

## EXEMPLES 2 A 6

Les conditions utilisées dans ces exemples sont identiques à celles de l'exemple 1, à l'exception du temps de contact entre la MGLA et la $\beta$-cyclodextrine qui est porté respectivement à 5 minutes, 10 minutes, 20 minutes, minutes, et 120 minutes.

Les résultats obtenus, en ce qui concerne les teneurs en cholestérol et en acides gras libres avant et après traitement, sont résumés dans le tableau I ci-après.

On peut constater que pour ce rapport pondéral eau/matière grasse = 1/1, et pour un temps de contact en présence d'eau de seulement 10 minutes, on obtient des taux de réduction de la teneur en cholestérol très satisfaisants puisque pouvant atteindre 70 % environ.

Le taux de réduction du pourcentage d'acides gras libres est quant à lui d'environ 30 à 40 %.

Cette série d'essais montre en outre que le temps de contact entre la cyclodextrine et la matière grasse, en l'absence d'eau, a très peu d'influence sur les résultats obtenus, puisque l'on constate que pour des temps très courts, de l'ordre de 1 minute et 5 minutes, les taux de réduction obtenus sont déjà de 65 à 71 %. Il apparaît même que des temps de contact plus longs sont plutôt néfastes du point de vue du rendement d'extraction du cholestérol et des acides gras libres.

Cet exemple est évidemment à comparer avec les exemples de la demande de brevet EP 0 256 911, d'après lesquels on n'obtient, en une seule opération, qu'un rendement d'élimination du cholestérol de 26 % après 3 heures de contact entre la cyclodextrine et la matière grasse en l'absence d'eau, suivies de 3 heures de contact sous agitation en présence d'eau, le rapport pondéral eau/MGLA étant de 10/1.

## TABLEAU I

| Ex N° | $H_2O$/ MGLA | t sans eau (min.) | t avec eau (min.) | % cholestérol | | | % acides gras | | |
|---|---|---|---|---|---|---|---|---|---|
| | | | | Teneur initiale | Teneur après traitement | % de réduction | Teneur initiale | Teneur après traitement | % de réduction |
| 1 | 1/1 | 1 | 10 | 0,31 | 0,11 | 65 | 0,24 | 0,15 | 38 |
| 2 | 1/1 | 5 | " | 0,31 | 0,09 | 71 | 0,24 | 0,15 | 38 |
| 3 | 1/1 | 10 | " | 0,31 | 0,10 | 68 | 0,24 | 0,16 | 33 |
| 4 | 1/1 | 20 | " | 0,31 | 0,13 | 58 | 0,24 | 0,16 | 33 |
| 5 | 1/1 | 40 | " | 0,31 | 0,13 | 58 | 0,24 | 0,15 | 38 |
| 6 | 1/1 | 120 | " | 0,29 | 0,13 | 55 | 0,21 | 0,16 | 24 |
| 7 | 2/1 | 10 | 10 | 0,31 | 0,23 | 26 | 0,24 | 0,17 | 29 |
| 8 | 3/1 | " | " | 0,31 | 0,26 | 16 | 0,24 | 0,18 | 25 |
| 9 | 4/1 | " | " | 0,31 | 0,28 | 10 | 0,24 | 0,18 | 25 |
| 10 | 5/1 | " | " | 0,31 | 0,27 | 13 | 0,24 | 0,19 | 21 |
| 11 | 6/1 | " | " | 0,31 | 0,27 | 13 | 0,24 | 0,18 | 25 |
| 12 | 10/1 | " | " | 0,29 | 0,27 | 7 | 0,21 | 0,16 | 24 |
| 13 | 1/1 | 10 | 10 | 0,27 | 0,19 | 30 | 0,16 | 0,15 | 6 |
| 14 | 1/1 | 5 | 10 | 0,27 | 0,08 | 70 | nd | nd | nd |

nd : non déterminé

EP 0 387 708 B1

### EXEMPLES 7 A 12

Ces exemples ont pour but de mettre en évidence l'influence du rapport pondéral eau/MGLA.

Les exemples 1 à 6 avaient été conduits en utilisant un rapport pondéral eau/MGLA de 1/1. Les exemples ci-après montrent l'influence négative d'un rapport pondéral eau/MGLA trop élevé.

Les conditions opératoires sont identiques à celles de l'exemple 3, c'est-à-dire temps de contact entre la $\beta$-cyclodextrine et la MGLA, en l'absence d'eau, de 10 minutes, pourcentage de cyclodextrine de 5 % en poids par rapport à la matière grasse, temps de contact sous agitation, en présence d'eau, de 10 minutes, température du mélange d'environ 50°C. Les quantités d'eau et de MGLA contenant 5 % de $\beta$-cyclodextrine ont été les suivantes pour chacun des exemples :

**EXEMPLE 7** :     2 kg d'eau pour 1 kg de MGLA contenant 50 g de cyclodextrine

**EXEMPLE 8** :     3 kg d'eau pour 1 kg de MGLA contenant 50 g de $\beta$-cyclodextrine

**EXEMPLE 9** :     2 kg d'eau pour 0,5 kg de MGLA contenant 25 g de $\beta$-cyclodextrine

**EXEMPLE 10** :     2,5 kg d'eau pour 0,5 kg de MGLA contenant 25 g de $\beta$-cyclodextrine

**EXEMPLE 11** :     3 kg d'eau pour 0,5 kg de MGLA contenant 25 g de $\beta$-cyclodextrine

**EXEMPLE 12** :     3 kg d'eau pour 0,3 kg de MGLA contenant 15 g de $\beta$-cyclodextrine.

Les résultats obtenus pour ces exemples 7 à 12 sont donnés dans le tableau I.

On peut constater que, toutes conditions étant égales par ailleurs, le rapport pondéral eau/MGLA a énormément d'influence sur les rendements d'extraction obtenus. En effet, le pourcentage de réduction de cholestérol passe ainsi de 68 % dans l'exemple 3, réalisé avec un rapport $H_2O$/MGLA de 1/1, à 26 % dans l'exemple 7, où ce rapport a été porté à 2/1. Le pourcentage de réduction du cholestérol diminue ensuite au fur et à mesure de l'augmentation du rapport eau/matière grasse.

L'évolution apparaît moins sensible sur le pourcentage de réduction des acides gras libres, mais l'optimum est là encore obtenu pour un rapport eau/matières grasses voisin de 1/1.

### EXEMPLE 13

Les conditions opératoires sont identiques à celles de l'exemple 2, à l'exception du mode de séparation des phases qui est réalisé ici par décantation, et non par séparation centrifuge, cette décantation étant suivie de trois étapes de lavage au moyen de 1 kg d'eau maintenue à 55°C pour chaque lavage. Les opérations de lavage sont mises en oeuvre afin d'éliminer un maximum de $\beta$-cyclodextrine complexée, étant donné que la quantité d'eau résiduelle dans la phase grasse décantée est nettement plus importante que dans le cas d'une séparation centrifuge (environ 15 % en 10 minutes pour la décantation contre 0,2 % pour la centrifugation).

Après le dernier lavage la phase grasse est finalement traitée par évaporation sous vide pour éliminer la dernière fraction d'eau.

Le résultat obtenu pour l'extraction du cholestérol et des acides gras libres est également donné dans le tableau I.

### EXEMPLE 14

Les conditions sont identiques à celles de l'exemple 3, à l'exception de la réalisation d'une étape supplémentaire de lavage au moyen d'1 kg d'eau à 55°C après l'étape de séparation centrifuge des phases. L'eau de lavage est séparée de la MGLA épurée par une nouvelle séparation centrifuge. Les résultats obtenus sont également donnés dans le tableau I.On constate que dans ce cas le lavage supplémentaire amène peu de gain dans le taux d'extraction du cholestérol.

### EXEMPLE 15

Les conditions sont identiques à celles de l'exemple 1, hormis le fait que la MGLA est à une température de 35°C, et que l'on ajoute 1900 cm$^3$ d'eau maintenue à 35°C au mélange MGLA-cyclodextrine.

La température maximale atteinte par le mélange est de 35°C et l'étape de contact sous agitation et en présence d'eau dure 10 minutes.

La séparation centrifuge est effectuée dans les mêmes conditions que dans l'exemple 1, et l'on obtient un taux de réduction du cholestérol de 54 % . Cet exemple montre qu'en jouant sur la température de réalisation du mélange matière grasse-eau-cyclodextrine, il est possible d'obtenir des résultats acceptables même avec des rapports pondéraux eau/matière grasse aussi élevés. Dans la mesure où la température du mélange pourrait encore être abaissée, compte-tenu notamment de la température de solidification du produit traité, l'invention permet, dans un mode de réalisation avantageux, de porter le rapport eau/matière grasse à des valeurs supérieures à 1,9, voire supérieures à 2.

## EXEMPLES 16 A 31

Les exemples 16 à 31 ont été réalisés à l'aide de l'installation représentée schématiquement à la figure 2.

Une quantité de $\beta$-cyclodextrine est dissoute dans 1,5 kg d'eau dans la cuve 12.

Une quantité de MGLA égale à la quantité d'eau est mise dans la cuve de réaction 13 puis est fluidifiée, si elle ne l'a pas été avant, par de l'eau chauffée qui circule dans la double paroi de la cuve 13.

La solution de $\beta$-cyclodextrine est mélangée à la MGLA liquéfiée et le mélange est fortement agité par un agitateur à hélice 14 monté de manière excentrique dans la cuve 13 et tournant à une vitesse de 2000 T/min. Le contenu de la cuve 13, c'est-à-dire l'émulsion formée, est maintenu à une température déterminée par de l'eau chauffée qui circule dans la double paroi de la cuve 13.

Après environ 10 minutes de mélange, la cuve 13 est vidée à travers le robinet de vidange 15 et les phases aqueuse et grasse sont séparées dans un appareil de centrifugation 6. Etant donné que ces exemples sont des essais réalisés à l'échelle du laboratoire, cette séparation centrifuge est réalisée à l'aide d'une écrémeuse du type ALFA-LAVAL 100 AE. A l'échelle industrielle une épuration centrifuge peut être utilisée. Tout ceci est répété pour différentes quantités de $\beta$-cyclodextrine, ainsi que pour différentes températures de l'émulsion.

Ces quantités de $\beta$-cyclodextrine et ces températures, ainsi que les résultats obtenus pour l'extraction du cholestérol et des acides gras libres, sont donnés dans le tableau II ci-après.

Les différentes conditions de température et de proportion de $\beta$-cyclodextrine relatives aux exemples 16 à 31 ont également été indiquées à la figure 3.

De ces exemples il ressort clairement qu'une réduction très importante des taux de cholestérol et d'acides gras libres est obtenue lorsque, pour une quantité déterminée de $\beta$-cyclodextrine, la température est proche de la courbe de solubilité, et également si la quantité de $\beta$-cyclodextrine est supérieure à 5% par rapport à la quantité de matière grasse.

Dans les exemples 18 et 29, l'émulsion fine "huile dans eau" ne s'est pas formée, d'où les mauvais résultats obtenus.

Dans les exemples 16,19 à 22, et 26, où les températures employées sont proches des températures de solubilité de la $\beta$-cyclodextrine, pratiquement tout le cholestérol est extrait.

De bons résultats sont encore obtenus lorsque la température est légèrement supérieure à la température de solubilité,comme dans les exemples 20 et 23, mais on constate cependant qu'il est préférable de choisir une température légèrement inférieure à la température de solubilité de la cyclodextrine.

## EXEMPLES 32 A 35

Avec la même installation que celle employée pour les exemples 16 à 31, des essais analogues sont effectués avec de la graisse de boeuf raffinée et du saindoux raffiné au lieu de MGLA.

Les conditions opératoires et les résultats des extractions sont donnés ci-après dans le tableau III pour la graisse de boeuf et dans le tableau IV pour le saindoux.

On peut constater que les résultats sont tout à fait probants, tant en ce qui concerne l'extraction du cholestérol que celle des acides gras libres.

## EXEMPLES 36 A 38

En plus des essais réalisés sur des matières grasses pures (MGLA, graisse de boeuf et saindoux), des essais ont également été réalisés avec succès sur de la crème fraîche de lait.

La crème fraîche de lait a la composition moyenne suivante :

| - eau | 54,8 % |
|---|---|
| - matière grasse | 40,0 % |
| - lactose | 2,8 % |
| - protéines | 2,0 % |
| - cendres | 0,4 % |

Dans l'exemple 36, la crème de lait a d'abord été concentrée à 50 % de matière grasse afin de respecter les conditions opératoires concernant la quantité de phase aqueuse; cette concentration a été réalisée par un écrémage à 55°C sur l'écrémeuse de laboratoire ALFA-LAVAL 100 AE.

Après cet écrémage, la crème à 50 % de matière grasse a été additionnée de $\beta$-cyclodextrine en poudre pour une teneur de 3,5 % sur la crème (soit 7 % exprimé sur la matière grasse ou 6,54 % exprimé sur la phase aqueuse y compris la $\beta$-cyclodextrine). Cette addition s'est faite sur la crème à 55°C. La crème a ensuite été refroidie à 50°C dans

TABLEAU II

| EX N° | MGLA (kg) | Eau (kg) | SOLUTION DE BCD (kg) | BCD/MGLA en % | % BCD en sol. aqueuse | TEMP. émul. (°C) | CHOLESTEROL | | | ACIDES GRAS LIBRES | | |
|---|---|---|---|---|---|---|---|---|---|---|---|---|
| | | | | | | | % avant trait. | % après trait. | % de réduc. | % avant trait. | % après trait. | % de réduc. |
| 16 | 1.5 | 1.5 | 0.150 | 10 | 9.09 | 60 | 0.302 | 0.006 | 98 | 0.36 | 0.20 | 44 |
| 17 | 1.5 | 1.5 | 0.150 | 10 | 9.09 | 70 | 0.304 | 0.040 | 87 | 0.26 | 0.14 | 46 |
| 18 | 1.5 | 1.5 | 0.150 | 10 | 9.09 | 75 | 0.293 | 0.262 | 11 | 0.29 | 0.27 | 7 |
| 19 | 1.5 | 1.5 | 0.120 | 8 | 7.41 | 58 | 0.304 | 0.000 | 100 | 0.26 | 0.12 | 54 |
| 20 | 1.5 | 1.5 | 0.120 | 8 | 7.41 | 63 | 0.304 | 0.025 | 92 | 0.26 | 0.13 | 50 |
| 21 | 1.5 | 1.5 | 0.105 | 7 | 6.54 | 50 | 0.258 | 0.004 | 98 | 0.19 | 0.08 | 58 |
| 22 | 1.5 | 1.5 | 0.105 | 7 | 6.54 | 54 | 0.258 | 0.003 | 99 | 0.19 | 0.10 | 47 |
| 23 | 1.5 | 1.5 | 0.105 | 7 | 6.54 | 60 | 0.304 | 0.063 | 79 | 0.26 | 0.15 | 42 |
| 24 | 1.5 | 1.5 | 0.105 | 7 | 6.54 | 70 | 0.304 | 0.119 | 61 | 0.26 | 0.18 | 31 |
| 25 | 1.5 | 1.5 | 0.090 | 6 | 5.66 | 45 | 0.258 | 0.060 | 77 | 0.19 | 0.09 | 53 |
| 26 | 1.5 | 1.5 | 0.090 | 6 | 5.66 | 50 | 0.303 | 0.013 | 96 | 0.24 | 0.12 | 50 |
| 27 | 1.5 | 1.5 | 0.075 | 5 | 4.76 | 40 | 0.258 | 0.079 | 69 | 0.19 | 0.08 | 58 |
| 28 | 1.5 | 1.5 | 0.075 | 5 | 4.76 | 45 | 0.333 | 0.080 | 76 | 0.37 | 0.24 | 35 |
| 29 | 1.5 | 1.5 | 0.075 | 5 | 4.76 | 70 | 0.279 | 0.244 | 13 | 0.24 | 0.20 | 17 |
| 30 | 1.5 | 1.5 | 0.060 | 4 | 3.85 | 35 | 0.258 | 0.117 | 55 | 0.19 | 0.08 | 58 |
| 31 | 1.5 | 1.5 | 0.045 | 3 | 2.91 | 35 | 0.258 | 0.164 | 37 | 0.19 | 0.14 | 26 |

la cuve de réaction et mise sous agitation à 2000 T/min.

Après environ 10 mn de mélange, la crème a été concentrée jusqu'à 70% de matière grasse par un nouveau passage sur l'écrémeuse de laboratoire. Un dépôt de β-cyclodextrine complexée a été obtenu sur la paroi interne du bol de l'écrémeuse.

Enfin, la crème à 70 % de matière grasse ainsi traitée a été refroidie, maturée au réfrigérateur pendant une nuit et barattée. La matière grasse du beurre obtenu par ce barattage a été soumise à l'analyse des stérols et des acides gras libres. Les résultats de l'extraction de ces composés de la matière grasse sont excellents, comme le montrent les résultats présentés aux tableaux V et VI ci-après.

Dans l'exemple 37, 3 kg de crème de lait à 38 % de matière grasse ont directement été additionnés de 79,8 g de $\beta$-cyclodextrine (soit 7 % exprimé sur la matière grasse ou 4,11 % exprimé sur la phase aqueuse y compris la $\beta$-cyclodextrine). Cette addition s'est faite sur la crème à 55°C.

La crème a ensuite été ramenée à 50°C dans la cuve de réaction et mise sous agitation à 2000 T/min.

Après 10 minutes de mélange à 50°C, la crème a été refroidie jusqu'à une température inférieure à 10°C par passage au travers d'un échangeur tubulaire.

Cette crème traitée a enfin été barattée après une nuit de maturation au réfrigérateur. Les conditions opératoires ainsi que les résultats de l'analyse des stérols (cholestérol) et des acides gras libres de la matière grasse du beurre obtenu par ce barattage sont fournis aux tableaux V et VI.

Dans l'exemple 38, 3 kg de crème de lait à 42,4 % de matière grasse ont directement été additionnés de 63,5 g de $\beta$-cyclodextrine (soit 5 % exprimé sur la matière grasse ou 3,54 % exprimé sur la phase aqueuse y compris la $\beta$-cyclodextrine). Cette addition s'est faite sur la crème à 55°C.

La crème a ensuite été ramenée à 45 °C dans la cuve de réaction et mise sous agitation à 2000 T/min.

TABLEAU III

| EX N° | GRAIS. BOEUF (kg) | Eau (kg) | SOLUTION DE BCD (kg) | BCD/MG en % | % BCD en sol. aqueuse | TEMP. émul. (°C) | CHOLESTEROL | | | ACIDES GRAS LIBRES | | |
|---|---|---|---|---|---|---|---|---|---|---|---|---|
| | | | | | | | % avant trait. | % après trait. | % de réduc. | % avant trait. | % après trait. | % de réduc. |
| 32 | 1.5 | 1.5 | 0.075 | 5 | 4.76 | 45 | 0.108 | 0.030 | 72 | 0.09 | 0.05 | 44 |
| 33 | 1.5 | 1.5 | 0.105 | 7 | 6.54 | 55 | 0.108 | 0.018 | 83 | 0.09 | 0.03 | 67 |

TABLEAU IV

| EX N° | SAIN-DOUX (kg) | Eau (kg) | SOLUTION DE BCD (kg) | BCD/MG en % | % BCD en sol. aqueuse | TEMP. émul. (°C) | CHOLESTEROL | | | ACIDES GRAS LIBRES | | |
|---|---|---|---|---|---|---|---|---|---|---|---|---|
| | | | | | | | % avant trait. | % après trait. | % de réduc. | % avant trait. | % après trait. | % de réduc. |
| 34 | 1.5 | 1.5 | 0.075 | 5 | 4.76 | 45 | 0.106 | 0.036 | 66 | 0.06 | 0.04 | 33 |
| 35 | 1.5 | 1.5 | 0.105 | 7 | 6.54 | 55 | 0.106 | 0.026 | 75 | 0.06 | 0.03 | 50 |

Après 10 minutes de mélange à 45 °C, la crème a été refroidie jusqu'à une température inférieure à 10 °C par passage au travers d'un échangeur tubulaire.

Après une nuit de maturation au réfrigérateur et barattage de la crème, les résultats d'extraction du cholestérol et des acides gras libres présentés au tableau VI ont été obtenus sur la matière grasse du beurre issue du barattage. Les conditions opératoires sont fournies au tableau V.

**EXEMPLE 39**

Cet exemple illustre l'extraction du cholestérol et des acides gras libres à partir de MGLA, en continu et sur une installation telle que celle représentée à la figure 1.

La séparation des phases grasse et aqueuse a été dans ce cas réalisée par centrifugation.

De la MGLA comportant une teneur en matière grasse supérieure à 99 % est ainsi amenée dans la cuve 5 maintenue à 40° par circulation d'eau chaude, à un débit de 1500 kg par heure.

Parallèlement, la solution de $\beta$-cyclodextrine est préparée en continu et sous agitation dans la cuve de dissolution 3. L'eau est apportée en continu dans cette cuve, avec un débit de 1500 kg par heure au moyen d'une pompe asservie par un débitmètre massique. La $\beta$-cyclodextrine en poudre est apportée en continu dans cette cuve 3 au moyen d'un distributeur de poudre, le débit étant réglé à 105 kg par heure. La dissolution de la $\beta$-cyclodextrine s'opère à 65°C et pendant environ 6 minutes.

Une émulsion du type huile dans eau entre la MGLA et la solution aqueuse de $\beta$-cyclodextrine est alors réalisée sous agitation et en continu dans la cuve d'émulsion 4. Pour ce faire, la MGLA à 40° est apportée en continu dans la cuve 4 a un débit de 1500 kg par heure, et la solution aqueuse de $\beta$-cyclodextrine à 65° est apportée dans la même cuve à un débit de 1605 kg par heure, les débits étant réglés au moyen de pompes asservies par des débitmètres

## TABLEAU V

| EX N° | CREME (kg) | % MG de la crème | (kg) | β-CYCLODEXTRINE AJOUTEE | | | TEMPERATURE DU MELANGE (°C) |
|---|---|---|---|---|---|---|---|
| | | | | BCD/ crème en % | BCD/ mat.gr. en % | BCD/phase aqueuse avec BCD en % | |
| -- | ----- | ----- | ------ | ------ | ------ | ------------ | ----------- |
| 36 | 3.0 | 50 | 0.105 | 3.5 | 7 | 6.54 | 50 |
| 37 | 3.0 | 38 | 0.0798 | 2.67 | 7 | 4.11 | 50 |
| 38 | 3.0 | 42.4 | 0.0635 | 2.12 | 5 | 3.54 | 45 |

## TABLEAU VI

| EX N° | CHOLESTEROL | | | ACIDES GRAS | | |
|---|---|---|---|---|---|---|
| | % avant trait. | % après trait. | % de réduc. | % avant trait. | % après trait. | % de réduc. |
| -- | ------- | ------- | ------ | ------- | ------- | ------ |
| 36 | 0.288 | 0.009 | 97 | 0.35 | 0.10 | 71 |
| 37 | 0.290 | 0.008 | 97 | 0.25 | 0.04 | 84 |
| 38 | 0.300 | 0.023 | 92 | 0.24 | 0.11 | 54 |

massiques. L'émulsion est formée par agitation à une température de 55°C, et le temps de séjour moyen dans la cuve 4 est d'environ 3 minutes.

L'émulsion est pompée de la cuve d'émulsion 4 au moyen d'une pompe positive dont le débit est réglé sur la somme des débits de MGLA et de la solution aqueuse de β-cyclodextrine et elle traverse un premier échangeur à plaques où elle est refroidie de 55°C, à une température inférieure à 30°C; ce refroidissement a pour but de stabiliser les complexes en les insolubilisant plus complètement. Elle traverse ensuite un second échangeur à plaques où elle est réchauffée à 42°C, c'est-à-dire à une température intermédiaire entre le point de fusion de la matière grasse et la température de réalisation de l'émulsion.

L'émulsion contenant environ 50 % de matière grasse est alors déstabilisée sur un premier concentrateur centrifuge qui concentre la phase lipidique à environ 80 %; la phase aqueuse ne contenant pratiquement pas de matière grasse n'est pas recyclée; la phase insoluble, c'est-à-dire les complexes formés, forme un dépôt dans le bol de la machine et ce dépôt est éjecté par ouverture du bol à intervalles réguliers.

La phase lipidique contenant environ 80 % de matière grasse est pompée vers un premier épurateur centrifuge où elle se concentre à environ 99,2 %. Un nouveau dépôt, plus faible, de phase insoluble, se forme encore dans le bol de cette deuxième machine centrifuge. Ce dépôt est également éjecté à intervalles réguliers par ouverture du bol. La phase aqueuse collectée contient environ 30 % de matière grasse et cette phase peut être concentrée à environ 75 % de matière grasse sur un deuxième concentrateur centrifuge pour pouvoir être recyclée en amont de la première machine centrifuge.

La phase grasse est enfin concentrée à 99,9 % de matière grasse par traitement dans l'évaporateur sous vide 11; cette opération s'effectue à 75°C sous un vide de 2630 Pa (20 torrs) et fournit une MGLA à teneur réduite en cholestérol et en acides gras libres, puisque le taux de réduction en cholestérol atteint, dans ces conditions, plus de 85 %.

**EXEMPLE 40**

Cet exemple est identique au précédent, hormis le fait que la séparation des phases aqueuse et lipidique se fait désormais par barattage, suivi d'une épuration centrifuge.

A la sortie de la cuve n° 4, l'émulsion est envoyée sur un échangeur de chaleur où elle est refroidie, puis l'émulsion froide est envoyée dans une cuve de maturation physique où elle est maintenue pendant environ 12 heures à une température inférieure à 10°C.

Après cette maturation physique qui a pour but de cristalliser la matière grasse et de stabiliser les complexes, l'émulsion froide est envoyée sur la baratte qui est en l'occurrence une baratte classique de beurrerie (baratte discontinue). L'émulsion est barattée à une température de 10°C; le "grain de beurre" obtenu est ensuite lavé et malaxé; le beurre est stocké au froid avant son traitement ultérieur; la phase aqueuse issue de ce barattage est pauvre en matière grasse.

Le "beurre" contenant environ 80 % de matière grasse est alors fondu et réchauffé dans un fondoir à grille, et la température du beurre fondu est stabilisée à environ 45°C.

Le beurre fondu contenant 70 à 80 % de matière grasse du lait est alors pompé vers un premier épurateur centrifuge où la phase lipidique se concentre à environ 99,2 % de matière grasse; un dépôt de phase insoluble se forme dans le bol de la machine, dépôt qui est éjecté à intervalles réguliers par ouverture du bol. La phase aqueuse collectée contient environ 30 % de matière grasse et elle peut être concentrée à environ 75 % de matière grasse sur un concentrateur centrifuge pour pouvoir être recyclée en amont du premier épurateur.

La phase lipidique peut ensuite être évaporée sous vide dans les mêmes conditions qu'à l'exemple précédent, pour obtenir une MGLA à 99,9 % de matière grasse à teneur réduite en cholestérol et en acides gras libres. Le pourcentage de réduction du cholestérol est, dans ces conditions, de plus de 85 %.

**EXEMPLE 41**

Dans cet exemple est décrite une opération en continu à partir de crème laitière à 40 % de matière grasse, la séparation des phases étant effectuée par épuration centrifuge.

La crème froide à traiter est tout d'abord réchauffée à 65°C dans un échangeur à plaques et alimente la ligne de traitement via une cuve tampon.

La dissolution de la $\beta$-cyclodextrine dans la phase aqueuse de la crème chaude est effectuée en continu et sous agitation dans la cuve de dissolution 3.

La crème est apportée en continu dans cette cuve, avec un débit d'environ 3000 kg/heure au moyen d'une pompe asservie par un débitmètre massique. La $\beta$-cyclodextrine en poudre est apportée en continu dans la même cuve au moyen d'un distributeur de poudre, le débit étant réglé à 84 kg/heure. La dissolution de la $\beta$-cyclodextrine est opérée à 65°C pendant environ 3 minutes.

La crème contenant la $\beta$-cyclodextrine est alors refroidie à 55°C dans un échangeur à plaques puis est envoyée en continu au moyen d'une pompe asservie par un débitmètre massique dans la cuve d'émulsion 4 où elle demeure sous agitation pendant environ 3 minutes. Ces conditions de température, de temps et d'agitation permettent aux complexes de $\beta$-cyclodextrine de se former.

La crème émulsionnée est alors pompée de la cuve d'émulsion 4 au moyen d'une pompe positive dont le débit est réglé sur le débit de la pompe d'alimentation de la cuve d'émulsion. Elle traverse un premier échangeur à plaques où elle est refroidie de 55°C, à une température inférieure à 30°C, puis traverse un second échangeur à plaques où elle est réchauffée à 55°C. La crème émulsionnée contenant environ 40 % de matière grasse du lait est envoyée sur un premier concentrateur centrifuge qui concentre la phase lipidique à environ 80 %. La phase aqueuse, ou babeurre, est collectée à la sortie eau du concentrateur et contient très peu de matière grasse; cette phase aqueuse n'est pas recyclée dans la ligne; la phase insoluble, c'est-à-dire les complexes, forme un dépôt dans le bol de la machine, dépôt qui est éjecté par ouverture du bol à intervalles réguliers.

La phase lipidique de la crème contenant environ 80 % de matière grasse du lait n'a pas été déstabilisée dans le premier concentrateur centrifuge et se présente toujours sous la forme d'une émulsion du type crème. Une inversion des phases est alors réalisée, et l'émulsion concentrée et inversée est pompée vers un épurateur centrifuge où elle se concentre à environ 99,2%. Un dépôt plus faible de phase insoluble se forme encore dans le bol et est éjecté à intervalles réguliers par ouverture de celui-ci. La phase aqueuse collectée, ou babeurre, qui contient environ 30 % de matière grasse, est concentrée jusqu'à 75 % de matière grasse au moyen d'un deuxième concentrateur centrifuge et est recyclée en amont de la première machine centrifuge.

La phase grasse est ensuite concentrée à 99,9 % de matière grasse par traitement dans un évaporateur sous vide, cette opération s'effectuant dans les mêmes conditions que dans les exemples précédents. On obtient ainsi une MGLA à teneur très réduite en cholestérol et en acides gras libres. Le taux de réduction du cholestérol est dans ce cas supérieur à 85 %.

**Revendications**

**Revendications pour les Etats contractants suivants : AT, BE, CH, DE, ES, FR, GB, GR, IT, LI, LU, NL, SE**

1. Procédé de réduction de la teneur en cholestérol et en acides gras libres d'une matière grasse d'origine animale, où l'on met en contact la matière grasse avec une cyclodextrine en présence d'une quantité d'eau telle que le rapport pondéral eau/matière grasse soit compris entre 0,4/1 et 1,9/1, puis est on sépare les complexes formés entre la cyclodextrine et le cholestérol et les acides gras libres, et caracterisé par les conditions d'agitation, telles qu'une émulsion du type "huile dans eau" formée.

2. Procédé selon la revendication 1, caractérisé par le fait que le rapport pondéral eau/matière grasse est compris entre 0,7/1 et 1,5/1.

3. Procédé selon la revendication 2, caractérisé par le fait que le rapport pondéral eau/matière grasse est voisin de 1/1.

4. Procédé selon l'une quelconque des revendications 1 à 3, caractérisé par le fait que l'agitation est réalisée à l'aide d'un agitateur tournant à une vitesse élevée.

5. Procédé selon la revendication 4, caractérisé par le fait que la vitesse d'agitation est supérieure à 800 tours/minute.

6. Procédé selon la revendication 5, caractérisé par le fait que la vitesse d'agitation est voisine de 2000 tours/minute.

7. Procédé selon l'une quelconque des revendications 1 à 6, caractérisé par le fait que la cyclodextrine est ajoutée en une quantité comprise entre 1 et 10 % en poids par rapport à la matière grasse.

8. Procédé selon l'une quelconque des revendications 1 à 6, caractérisé par le fait que la cyclodextrine est ajoutée en une quantité comprise entre 3 et 8 % en poids par rapport à la matière grasse.

9. Procédé selon l'une quelconque des revendications 1 à 8, caractérisé par le fait que l'on établit la température du milieu matière grasse - eau - cyclodextrine à une valeur relativement proche de la température de solubilité T de la cyclodextrine qui correspond à la concentration de cyclodextrine présente dans le milieu.

**10.** Procédé selon l'une quelconque des revendications 1 à 9, caractérisé par le fait que le contact entre la matière grasse, la cyclodextrine et l'eau est maintenu pendant un temps de 1 à 20 minutes.

**11.** Procédé selon l'une quelconque des revendications 1 à 10, caractérisé par le fait que l'étape de séparation des complexes est effectuée par épuration centrifuge.

**12.** Procédé selon l'une quelconque des revendications 1 à 11, caractérisé par le fait que l'étape de séparation est effectuée à une température inférieure à la température employée lors de la formation des complexes.

**13.** Procédé selon l'une quelconque des revendications 1 à 12, caractérisé par le fait que la séparation des phases aqueuse et lipidique après formation des complexes est réalisée par barattage à froid de l'émulsion eau - cyclodextrine - matière grasse.

**14.** Procédé selon l'une quelconque des revendications 1 à 13, caractérisé par le fait que la cyclodextrine utilisée est la $\beta$ cyclodextrine.

### Revendications pour l'Etat contractant suivant : DK

**1.** Procédé de réduction de la teneur en cholestérol et en acides gras libres d'une matière grasse d'origine animale, où l'on met en contact la matière grasse avec une cyclodextrine, sous agitation et en présence d'une quantité d'eau, puis on sépare les complexes formés entre la cyclodextrine et le cholestérol et les acides gras libres, et caractérisé par le fait que le rapport pondéral eau/matière grasse est compris entre 0,4/1 et 1,9/1.

**2.** Procédé selon la revendication 1, caractérisé par le fait que le rapport pondéral eau/matière grasse est compris entre 0,7/1 et 1,5/1.

**3.** Procédé selon la revendication 2, caractérisé par le fait que le rapport pondéral eau/matière grasse est voisin de 1/1.

**4.** Procédé selon l'une quelconque des revendications 1 à 3, caractérisé par le fait que les conditions d'agitation sont réglées de telle façon qu'une émulsion du type huile dans eau soit formée.

**5.** Procédé selon l'une quelconque des revendications 1 à 4, caractérisé par le fait que l'agitation est réalisée à l'aide d'un agitateur tournant à vitesse élevée.

**6.** Procédé selon la revendication 5, caractérisé par le fait que l'agitation est réalisée à l'aide d'un agitateur tournant à une vitesse supérieure à 800 tours/minute

**7.** Procédé selon la revendication 6, caractérisé par le fait que l'agitation est réalisée à l'aide d'un agitateur tournant à une vitesse voisine de 2000 tours/minute.

**8.** Procédé selon l'une quelconque des revendications 1 à 7, caractérisé par le fait que la cyclodextrine est ajoutée en une quantité comprise entre 1 et 10 % en poids par rapport à la matière grasse.

**9.** Procédé selon la revendication 8, caractérisé par le fait que la cyclodextrine est ajoutée en une quantité comprise entre 3 et 8 % en poids par rapport à la matière grasse.

**10.** Procédé selon l'une quelconque des revendications 1 à 9, caractérisé par le fait que l'on établit la température du milieu matière grasse - eau - cyclodextrine à une valeur relativement proche de la température de solubilité T de la cyclodextrine qui correspond à la concentration de cyclodextrine présente dans le milieu.

**11.** Procédé selon l'une quelconque des revendications 1 à 10, caractérisé par le fait que le contact entre la matière grasse, la cyclodextrine et l'eau est maintenu pendant un temps de 1 à 20 minutes.

**12.** Procédé selon l'une quelconque des revendications 1 à 11, caractérisé par le fait que l'étape de séparation est effectuée par épuration centrifuge.

**13.** Procédé selon l'une quelconque des revendications 1 à 12, caractérisé par le fait que l'étape de séparation est effectuée à une température inférieure à la température employée lors de la formation des complexes.

**14.** Procédé selon l'une quelconque des revendications 1 à 13, caractérisé par le fait que la séparation des phases aqueuse et lipidique après formation des complexes est réalisée par barattage à froid de l'émulsion eau-cyclodextrine-matière grasse.

**15.** Procédé selon l'une quelconque des revendications 1 à 14, caractérisé par le fait que la cyclodextrine utilisée est la $\beta$ cyclodextrine.

**Claims**
**Claims for the following Contracting States : AT, BE, CH, DE, ES, FR, GB, GR, IT, LI, LU, NL, SE**

**1.** Process for the reduction of the content of cholesterol and of free fatty acids of a fatty substance of animal origin, where the fat is brought into contact with a cyclodextrin in the presence of an amount of water such that the water/fat ratio by weight is comprised between 0.4/1 and 1.9/1, and then the complexes formed between the cyclodextrin and the cholesterol and the free fatty acids are separated, and characterized by the stirring conditions such that an emulsion of the oil-in-water type is formed.

**2.** Process according to claim 1, characterized by the fact that the water/fat ratio by weight is comprised between 0.7/1 and 1.5/1.

**3.** Process according to claim 2, characterized by the fact that the water/fat ratio by weight is close to 1/1.

**4.** Process according to any one of claims 1 to 3, characterized by the fact that the stirring is performed by means of a stirrer rotating at high speed.

**5.** Process according to claim 4, characterized by the fact that the stirring is performed at a speed higher than 800 rpm.

**6.** Process according to claim 5, characterized by the fact that the stirring is performed at a speed close to 2000 rpm.

**7.** Process according to any one of claims 1 to 6, characterized by the fact that the cyclodextrin is added in an amount comprising between 1 and 10 % by weight with respect to the amount of fat.

**8.** Process according to any one of claims 1 to 6, characterized by the fact that the cyclodextrin is added in an amount comprising between 3 and 8 % by weight with respect to the amount of fat.

**9.** Process according to any one of claims 1 to 8, characterized by the fact that the temperature of the fat-water-cyclodextrin medium is adjusted to a value relatively close to the solubility temperature T of cyclodextrin corresponding to the concentration of cyclodextrin present in the medium.

**10.** Process according to any one of claims 1 to 9, characterized by the fact that the contact between the fat, the cyclodextrin and the water is maintained for a time of 1 to 20 minutes.

**11.** Process according to any one of claims 1 to 10, characterized by the fact that the separation step is performed by centrifugal purification.

**12.** Process according to any one of claims 1 to 11, characterized by the fact that the separation step is carried out at a temperature below the temperature used during the formation of the complexes.

**13.** Process according to any one of claims 1 to 12, characterized by the fact that the separation of the aqueous and lipid phases after formation of complexes is performed by cold churning of the water-cyclodextrin-fat emulsion.

14. Process according to any one of claims 1 to 13, characterized by the fact that the cyclodextrin used is β-cyclodextrin.

**Claims for the following Contracting State : DK**

1. Process for the reduction of the content of cholesterol and of free fatty acids of a fatty substance of animal origin, where the fat is brought into contact with a cyclodextrin, with stirring and in the presence of an amount of water, and then the complexes formed between the cyclodextrin and the cholesterol and the free fatty acids are separated, and characterized by the fact that the water/fat ratio by weight is comprised between 0.4/1 and 1.9/1.

2. Process according to claim 1, characterized by the fact that the water/fat ratio by weight is comprised between 0.7/1 and 1.5/1.

3. Process according to claim 2, characterized by the fact that the water/fat ratio by weight is close to 1/1.

4. Process according to any one of claims 1 to 3, characterized by the fact that the stirring conditions are regulated such that an emulsion of the oil-in-water type is formed.

5. Process according to any one of claims 1 to 4, characterized by the fact that the stirring is performed by means of a stirrer rotating at high speed.

6. Process according to claim 5, characterized by the fact that the stirring is performed by means of a stirrer rotating at a speed higher than 800 rpm.

7. Process according to claim 6, characterized by the fact that the stirring is performed by means of a stirrer rotating at a speed close to 2000 rpm.

8. Process according to any one of claims 1 to 7, characterized by the fact that the cyclodextrin is added in an amount comprising between 1 and 10 % by weight with respect to the amount of fat.

9. Process according to claim 8, characterized by the fact that the cyclodextrin is added in an amount comprising between 3 and 8 % by weight with respect to the amount of fat.

10. Process according to any one of claims 1 to 9, characterized by the fact that the temperature of the fat-water-cyclodextrin medium is adjusted to a value relatively close to the solubility temperature T of cyclodextrin corresponding to the concentration of cyclodextrin in the medium.

11. Process according to any one of claims 1 to 10, characterized by the fact that the contact between the fat, the cyclodextrin and the water is maintained for a time of 1 to 20 minutes.

12. Process according to any one of claims 1 to 11, characterized by the fact that the separation step is performed by centrifugal purification.

13. Process according to any one of claims 1 to 12, characterized by the fact that the separation step is carried out at a temperature below the temperature used during the formation of the complexes.

14. Process according to any one of claims 1 to 13, characterized by the fact that the separation of the aqueous and lipid phases after formation of complexes is performed by cold churning of the water-cyclodextrin-fat emulsion.

15. Process according to any one of claims 1 to 14, characterized by the fact that the cyclodextrin used is β-cyclodextrin.

**Patentansprüche**

**Patentansprüche für folgende Vertragsstaaten : AT, BE, CH, DE, ES, FR, GB, GR, IT, LI, LU, NL, SE**

1. Verfahren zur Reduktion des Gehalts an Cholesterin und freien Fettsäuren in tierischem Fett, wobei das Fett in Gegenwart einer Menge an Wasser mit einem Cyclodextrin in Kontakt gebracht wird, so daß das Gleichgewichtsverhältnis Wasser/Fett zwischen 0,4:1 und 1,9:1 beträgt, dann Trennen der zwischen dem Cyclodextrin und dem Cholesterin und den freien Fettsäuren entstandenen Komplexe, und gekennzeichnet durch derartige Rührbedingungen, daß eine Emulsion vom Typ "Öl in Wasser" erzeugt wird.

2. Verfahren nach Anspruch 1, dadurch gekennzeichnet, daß das GleichgewichtsverhältnisWasser/Fett zwischen 0,7:1 und 1,5:1 beträgt.

3. Verfahren nach Anspruch 2, dadurch gekennzeichnet, daß das GleichgewichtsverhältnisWasser/Fett nahe bei 1:1 liegt.

4. Verfahren nach einem der Ansprüche 1 bis 3, dadurch gekennzeichnet, daß das Rühren mit Hilfe eines Drehrührers bei einer erhöhten Geschwindigkeit durchgeführt wird.

5. Verfahren nach Anspruch 4, dadurch gekennzeichnet, daß die Rührgeschwindigkeit oberhalb von 800 U/min liegt.

6. Verfahren nach Anspruch 5, dadurch gekennzeichnet, daß die Rührgeschwindigkeit nahe bei 2000 U/min liegt.

7. Verfahren nach einem der Ansprüche 1 bis 6, dadurch gekennzeichnet, daß das Cyclodextrin in einem Gesamtgehalt zwischen 1 und 10 Gew.-% im Verhältnis zum Fett zugegeben wird.

8. Verfahren nach einem der Ansprüche 1 bis 6, dadurch gekennzeichnet, daß das Cyclodextrin in einem Gesamtgehalt zwischen 3 und 8 Gew.-% im Verhältnis zum Fett zugegeben wird.

9. Verfahren nach einem der Ansprüche 1 bis 8, dadurch gekennzeichnet, daß die Temperatur des Gemischs Fett-Wasser-Cyclodextrin relativ nahe einem Wert der Löslichkeitstemperatur T des Cyclodextrins eingestellt wird, welche der im Gemisch vorhandenen Cyclodextrinkonzentration entspricht.

10. Verfahren nach einem der Ansprüche 1 bis 9, dadurch gekennzeichnet, daß der Kontakt zwischen dem Fett, dem Cyclodextrin und dem Wasser während einer Zeitdauer von 1 bis 20 min beibehalten wird.

11. Verfahren nach einem der Ansprüche 1 bis 10, dadurch gekennzeichnet, daß der Trennvorgang der Komplexe durch Reinigung mit Hilfe von Zentrifugieren durchgeführt wird.

12. Verfahren nach einem der Ansprüche 1 bis 11, dadurch gekennzeichnet, daß der Trennvorgang bei einer niedrigeren Temperatur als der zur Bildung der Komplexe angewandten durchgeführt wird.

13. Verfahren nach einem der Ansprüche 1 bis 12, dadurch gekennzeichnet, daß das Trennen der Wasser- und Fett-Phasen nach der Bildung der Komplexe durch kaltes Buttern der Emulsion Wasser-Cyclodextrin-Fett durchgeführt wird.

14. Verfahren nach einem der Ansprüche 1 bis 13, dadurch gekennzeichnet, daß das verwendete Cyclodextrin $\beta$-Cyclodextrin ist.

**Patentansprüche für folgenden Vertragsstaat : DK**

1. Verfahren zur Reduktion des Gehalts an Cholesterin und freien Fettsäuren eines tierischen Fetts, wobei das Fett unter Rühren und in Gegenwart einer Menge an Wasser mit einem Cyclodextrin in Kontakt gebracht wird, dann Trennen der zwischen dem Cyclodextrin und dem Cholesterin und den freien Fettsäuren entstandenen Komplexe, und dadurch gekennzeichnet, daß das Gleichgewichtsverhältnis Wasser/Fett zwischen 0,4:1 und 1,9:1 beträgt.

**2.** Verfahren nach Anspruch 1, dadurch gekennzeichnet, daß das GleichgewichtsverhältnisWasser/Fett zwischen 0,7:1 und 1,5:1 beträgt.

**3.** Verfahren nach Anspruch 2, dadurch gekennzeichnet, daß das GleichgewichtsverhältnisWasser/Fett nahe bei 1:1 liegt.

**4.** Verfahren nach einem der Ansprüche 1 bis 3, dadurch gekennzeichnet, daß die Rührbedingungen derart gesteuert werden, daß eine Emulsion vom Typ Öl in Wasser erzeugt wird.

**5.** Verfahren nach einem der Ansprüche 1 bis 4, dadurch gekennzeichnet, daß das Rühren mit Hilfe eines Drehrührers bei einer erhöhten Geschwindigkeit durchgeführt wird.

**6.** Verfahren nach Anspruch 5, dadurch gekennzeichnet, daß das Rühren mit Hilfe eines Drehrührers bei einer Geschwindigkeit oberhalb von 800 U/min durchgeführt wird.

**7.** Verfahren nach Anspruch 6, dadurch gekennzeichnet, daß das Rühren mit Hilfe eines Drehrührers bei einer Geschwindigkeit nahe 2000 U/min durchgeführt wird.

**8.** Verfahren nach einem der Ansprüche 1 bis 7, dadurch gekennzeichnet, daß das Cyclodextrin in einem Gesamtgehalt zwischen 1 und 10 Gew.-% im Verhältnis zum Fett zugegeben wird.

**9.** Verfahren nach Anspruch 8, dadurch gekennzeichnet, daß das Cyclodextrin in einem Gesamtgehalt zwischen 3 und 8 Gew.-% im Verhältnis zum Fett zugegeben wird.

**10.** Verfahren nach einem der Ansprüche 1 bis 9, dadurch gekennzeichnet, daß die Temperatur des Gemischs Fett-Wasser-Cyclodextrin relativ nahe einem Wert der Löslichkeitstemperatur T des Cyclodextrins eingestellt wird, welche der im Gemisch vorhandenen Cyclodextrinkonzentration entspricht.

**11.** Verfahren nach einem der Ansprüche 1 bis 10, dadurch gekennzeichnet, daß der Kontakt zwischen dem Fett, dem Cyclodextrin und dem Wasser während einer Zeitdauer von 1 bis 20 min beibehalten wird.

**12.** Verfahren nach einem der Ansprüche 1 bis 11, dadurch gekennzeichnet, daß der Trennvorgang durch Reinigung mit Hilfe von Zentrifugieren durchgeführt wird.

**13.** Verfahren nach einem der Ansprüche 1 bis 12, dadurch gekennzeichnet, daß der Trennvorgang bei einer niedrigeren Temperatur als der zur Bildung der Komplexe angewandten durchgeführt wird.

**14.** Verfahren nach einem der Ansprüche 1 bis 13, dadurch gekennzeichnet, daß das Trennen der Wasser- und Fett-Phasen nach der Bildung der Komplexe durch kaltes Buttern der Emulsion Wasser-Cyclodextrin-Fett durchgeführt wird.

**15.** Verfahren nach einem der Ansprüche 1 bis 14, dadurch gekennzeichnet, daß das verwendete Cyclodextrin $\beta$-Cyclodextrin ist.

FIG.1.

FIG.2.

FIG.3.

BCD en solution
% en poids